# EUROPÄISCHE PATENTANMELDUNG

(11) **EP 2 098 416 A1**
(43) Veröffentlichungstag der Anmeldung: **09.09.2009**
(21) Anmeldenummer: 08004281.5
(22) Anmeldetag: 07.03.2008
(51) Int. Cl.: B60R 21/045, B60R 7/06

(54) **Armaturentafel-Baugruppe**

(71) Anmelder: Delphi Technologies, Inc., Troy, Michigan 48007 (US)
(72) Erfinder: Dancasius, Michael, Dr., 42115 Wuppertal (DE); V. der Muehlen, Achim, 42279 Wuppertal (DE); Ramaer, Norbert, 50171 Kerpen Blatzheim (DE)
(74) Vertreter: Manitz, Finsterwald & Partner GbR

(57) **Zusammenfassung**

Die Erfindung betrifft eine Armaturentafel-Baugruppe für ein Kraftfahrzeug, mit einem Handschuhfachkasten (10) und einer zusätzlichen Stützstruktur (12), welche zumindest mittelbar mit einer Tragstruktur (24) des Kraftfahrzeugs verbunden werden kann und im verbundenen Zustand derart in Bezug auf den Handschuhfachkasten (10) angeordnet ist, dass auf den Handschuhfachkasten einwirkende Aufprallkräfte im Wesentlichen von der Stützstruktur (12) aufnehmbar sind.

## Beschreibung

Die vorliegende Erfindung betrifft eine Armaturentafel-Baugruppe für ein Kraftfahrzeug, welche speziell ausgebildet ist, um mit möglichst geringem Aufwand den in den unterschiedlichen Ländern geltenden Crash- und Sicherheitsbestimmungen gerecht werden zu können.

Grundsätzlich müssen Kraftfahrzeuge bestimmte Crash- und Sicherheitsbestimmungen erfüllen. Allerdings können diese Crash- und Sicherheitsbestimmungen in einzelnen Ländern voneinander abweichen, so dass ein Kraftfahrzeug beispielsweise auf der sicheren Seite liegend für den ungünstigsten Crash-Fall bzw. die höchsten Sicherheitsanforderungen entworfen werden kann, um für beliebige Länder die Zulassung zu erhalten. Alternativ dazu wäre es ebenfalls möglich, ein Kraftfahrzeug speziell für unterschiedliche Länder zu entwickeln, um so den in den jeweiligen Ländern geltenden Crash- und Sicherheitsbestimmungen individuell gerecht zu werden. Diese beiden Herangehensweisen erweisen sich jedoch in wirtschaftlicher Hinsicht als nachteilig, da im ersten Falle, bei dem ein einziges Kraftfahrzeugmodell für unterschiedliche Länder entwickelt wird, das Modell für bestimmte Länder gewissermaßen "überdimensioniert" ist, wohingegen im zweiten Falle, bei dem ein Kraftfahrzeug für bestimmte Länder individuell hinsichtlich der jeweils geltenden Crash- und Sicherheitsbestimmungen entwickelt wird, der Entwurf-, Konstruktions- und Montageaufwand unverhältnismäßig hoch ist.

In der Vergangenheit führten die in den einzelnen Ländern geltenden Crash- und Sicherheitsbestimmungen insbesondere dazu, dass die Armaturentafel eines Kraftfahrzeugs individuell für unterschiedliche Länder dimensioniert und angefertigt werden musste.

So muss beispielsweise ein für den US-amerikanischen Markt bestimmtes Kraftfahrzeug und insbesondere dessen Armaturentafel im Bereich des Handschuhfachs so ausgebildet werden, dass die bei einem Crash von einem unangegurteten Dummy bzw. dessen Knie oder Oberschenkel auf die Armaturentafel ausgeübten Kräfte zuverlässig in die Kraftfahrzeugtragstruktur eingeleitet werden, damit die Armaturentafel eine Rückhaltefunktion ausüben kann, die erforderlich ist, damit insgesamt der Dummy bei einem Unfall eine auch im Hinblick auf weitere Sicherheitssystem, insbesondere Airbags, einer günstigen Kinematik unterworfen ist. Hierbei wird von dem Umstand Gebrauch gemacht, dass z.B. in den USA die einschlägigen Bestimmungen vergleichsweise hohe Kräfte erlauben, die bei einem Unfall in den Oberschenkelknochen eines Fahrzeuginsassen auftreten dürfen.

Im Unterschied dazu berücksichtigen beispielsweise die Sicherheitsbestimmungen der meisten europäischen Länder einen Crashfall mit einem angegurteten Dummy, bei dem also bereits der Sicherheitsgurt für den Rückhalt und damit für eine günstige Kinematik sorgt. Die Armaturentafel braucht folglich keine Rückhaltefunktion zu erfüllen. Hinzu kommt, dass ohnehin die europäischen Bestimmungen im Vergleich z.B. zu den USA wesentlich geringere Grenzwerte fordern, was die zulässigen Kräfte anbetrifft, die bei einem Unfall in den Oberschenkelknochen eines Fahrzeuginsassen auftreten dürfen.

Während also z.B. in den USA eine vergleichsweise steife Armaturentafel zumindest im Bereich des Handschuhfachkastens wegen der gewünschten Rückhaltefunktion für den nicht angegurteten Dummy erforderlich und - wegen der relativ hohen Grenzwerte - auch erlaubt ist, muss z.B. in Europa wegen der niedrigeren Grenzwerte eine weniger steife Armaturentafel bzw. ein "weicher" Handschuhfachkasten vorgesehen werden, was insofern aber unproblematisch ist, als ohnehin von einem angegurteten Dummy ausgegangen wird, der im Bereich der Knie bzw. Beine keinen Rückhalt durch die Armaturentafel benötigt. Vereinfacht ausgedrückt heißt dies, dass der von der Armaturentafel im Kniebereich entgegengesetzte Widerstand z.B. in den USA relativ hoch sein muss (und auch darf), während er z.B. in Europa relativ niedrig sein muss (und auch kann).

Derartigen länderspezifischen Gegebenheiten muss bei dem Entwurf einer neuen Armaturentafel Rechnung getragen werden.

Erschwerend kommt bei der Auslegung der Armaturentafel und insbesondere des Handschuhfachkastens hinzu, dass immer mehr zusätzliche elektronische Module in die Armaturentafel integriert werden müssen, was dazu führt, dass für die Ausbildung des Handschuhfachkastens und für dessen spezielle Anpassung an die in den einzelnen Ländern geltenden Sicherheitsbestimmungen immer weniger Platz zur Verfügung steht.

Der Erfindung liegt daher die Aufgabe zugrunde, eine Armaturentafel-Baugruppe für ein Kraftfahrzeug zu schaffen, mit der die in den einzelnen Ländern geltenden Crash- und Sicherheitsbestimmungen auf einfache und kostengünstige Weise erfüllt werden können und die insbesondere gleichzeitig eine Maximierung des Volumens des Handschuhfachkastens ermöglicht.

Diese Aufgabe wird mit einer Armaturentafel-Baugruppe für ein Kraftfahrzeug gelöst, welche die Merkmale des Anspruchs 1 aufweist. Insbesondere wird die Aufgabe dadurch gelöst, dass die Armaturentafel-Baugruppe einen Handschuhfachkasten und eine zusätzliche, insbesondere von dem Handschuhfachkasten entkoppelte und somit separat handhabbare, Stützstruktur aufweist, welche zumindest mittelbar mit einer Tragstruktur des Kraftfahrzeugs verbunden werden kann und derart in Bezug auf den Handschuhfachkasten angeordnet ist, dass auf den Handschuhfachkasten einwirkende Aufprallkräfte im Wesentlichen von der Stützstruktur aufnehmbar sind.

Mit anderen Worten kann der Handschuhfachkasten als ein separates Behältnis ausgebildet werden, welches als solches insbesondere im Vergleich zu der Stützstruktur eine geringe Steifigkeit aufweist. Dadurch, dass die Stützstruktur zusätzlich zu dem Handschuhfachkasten vorgesehen ist, kann dem Handschuhfachkasten primär eine reine Behältnisfunktion zugewiesen werden, was eine verhältnismäßig weiche Konstruktion desselben ermöglicht, wohingegen der Stützstruktur die Funktion der Aufnahme der Aufprallenergie und somit eine Rückhaltefunktion zugewiesen werden kann. Im Unterschied zu bekannten Armaturentafelbaugruppen, bei denen der Handschuhfachkasten sowohl für die Behältnisfunktion als auch für die Energieabsorptions- bzw. Rückhaltefunktion ausgelegt sein muss, ermöglicht somit die erfindungsgemäße Entkoppelung dieser beiden Funktionen, dass beispielsweise ein für den US-amerikanischen Markt bestimmtes Kraftfahrzeug mit demselben Handschuhfachkasten ausgestattet werden kann wie ein für den europäischen Markt bestimmtes Kraftfahrzeug, bei dem dann jedoch die Stützstruktur zumindest zum Teil oder sogar ganz entfallen kann, indem z.B. ein Bestandteil der Stützstruktur einfach weggelassen wird.

Diese einfache Anpassbarkeit an die jeweiligen länderspezifischen Gegebenheiten wird durch die funktionsmäßige Entkoppelung der Stützstruktur von dem Handschuhfachkasten bzw. durch eine separate Handhabbarkeit von Handschuhfachkasten und Stützstruktur erreicht, d.h. dadurch, dass die Stützstruktur zusätzlich zu dem Handschuhfachkasten vorgesehen ist und unabhängig von dem Handschuhfachkasten ausgelegt werden kann. Sowohl die Stützstruktur als auch der Handschuhfachkasten können somit für die ihnen zugewiesenen Funktionen gezielt ausgelegt bzw. dimensioniert werden, so dass weder bei der Dimensionierung der Stützstruktur noch bei der Dimensionierung des Handschuhfachkastens wie auch immer geartete Kompromisse eingegangen werden müssen. So können beispielsweise sowohl für die Stützstruktur als auch für den Handschuhfachkasten genau die Materialien und/oder Konstruktionen zum Einsatz kommen, welche zur Erfüllung der Behältnisfunktion bzw. der Rückhaltefunktion am besten geeignet sind. In entsprechender Weise kann auch die Stützstruktur aus dem jeweils am besten geeigneten Material und unter Verwendung der am besten geeigneten Herstellungsverfahren gefertigt werden, um die Absorptions- bzw. Rückhaltefunktion optimal erfüllen zu können.

So kann beispielsweise die Stützstruktur aus Magnesium, Aluminium, Stahl, Kunststoff, (Glas-)faserverstärktem Kunststoff oder beliebigen weiteren Werkstoffen unter Einsatz verschiedenster Herstellungsverfahren gefertigt werden. Ebenfalls erlaubt die zumindest funktionsmäßige Entkoppelung der Stützstruktur von dem Handschuhfachkasten, dass die Stützstruktur und insbesondere deren einzelne Trägerabschnitte individuelle Querschnittsformen mit bei Bedarf variierenden Flächenträgheitsmomenten aufweisen können (z. B. U-, L-, T-, I- oder O-förmiger Querschnitt).

Insgesamt ist der Konstrukteur, welcher mit dem Entwurf einer Armaturentafel betraut ist, infolge der Entkoppelung der Aufprallabsorptions- bzw. Rückhaltefunktion einerseits von der Behältnisfunktion andererseits somit beim Entwurf einer neuen Armaturentafel weitgehend frei, da er sowohl den Handschuhfachkasten als auch die Stützstruktur speziell auf die diesen zugewiesenen Funktionen abstimmen kann.

Bevorzugte Ausführungsformen der erfindungsgemäßen Armaturentafel-Baugruppe ergeben sich aus den Unteransprüchen, der folgenden Beschreibung sowie aus den Zeichnungen.

Die folgende Figurenbeschreibung erläutert rein exemplarisch unterschiedliche Ausführungsformen der erfindungsgemäßen Armaturentafel-Baugruppe, wobei:
- Fig. 1: eine perspektivische Darstellung einer ersten Ausführungsform einer erfindungsgemäßen Armaturentafel-Baugruppe zeigt;
- Fig. 2: eine perspektivische Darstellung einer zweiten Ausführungsform einer erfindungsgemäßen Armaturentafel-Baugruppe zeigt;
- Fig. 3: eine Schnittdarstellung der Armaturentafel-Baugruppe der Fig. 3 zeigt;
- Fig. 4: eine perspektivische Darstellung einer dritten Ausführungsform einer erfindungsgemäßen Armaturentafel-Baugruppe zeigt;
- Fig. 5: eine perspektivische Darstellung einer vierten Ausführungsform einer erfindungsgemäßen Armaturentafel-Baugruppe zeigt;
- Fig. 6: eine perspektivische Darstellung einer fünften Ausführungsform einer erfindungsgemäßen Armaturentafel-Baugruppe zeigt;
- Fig. 7: eine Schnittdarstellung einer sechsten Ausführungsform einer erfindungsgemäßen Armaturentafel-Baugruppe zeigt;
- Fig. 8: eine perspektivische Darstellung einer siebten Ausführungsform einer erfindungsgemäßen Armaturentafel-Baugruppe zeigt;
- Fig. 9: eine perspektivische Darstellung einer achten Ausführungsform einer erfindungsgemäßen Armaturentafel-Baugruppe zeigt;
- Fig. 10: eine perspektivische Darstellung einer neunten Ausführungsform einer erfindungsgemäßen Armaturentafel-Baugruppe zeigt;
- Fig. 11 bis 14: perspektivische Darstellungen einer Armaturentafel-Baugruppe zeigen, deren Handschuhfachkasten mittels Energieabsorptionsträger ausgesteift ist; und
- Fig. 15: eine perspektivische Darstellung einer Armaturentafel-Baugruppe mit einem Handschuhfachkasten zeigt, welcher reduzierte Steifigkeitseigenschaften aufweist.

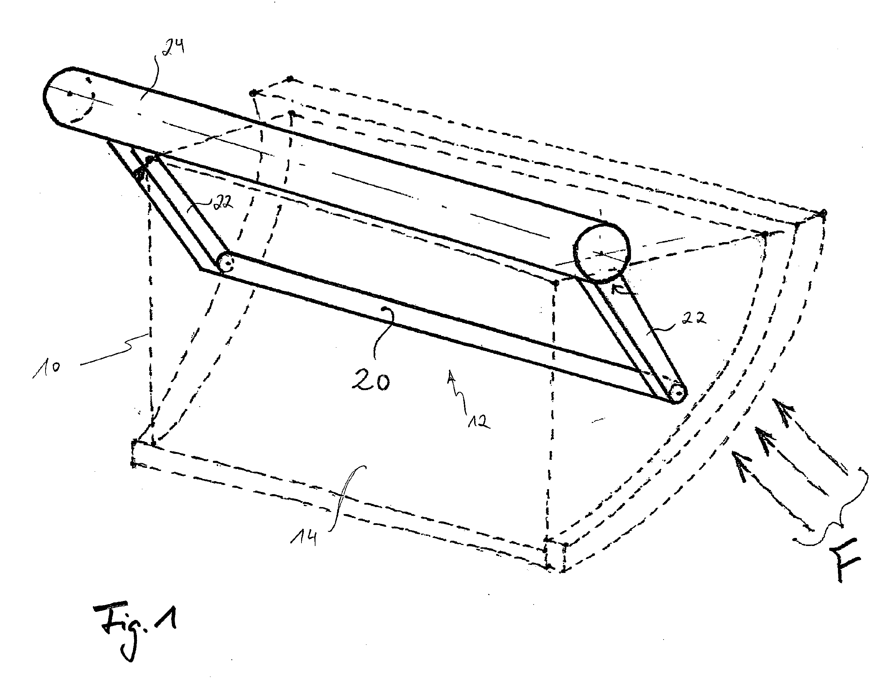

In der Fig. 1 ist eine erste Ausführungsform einer Armaturentafel-Baugruppe für ein Kraftfahrzeug dargestellt, welche zusätzlich zu einem hier nur schematisch dargestellten Handschuhfachkasten 10 eine Stützstruktur 12 umfasst, welche in der dargestellten Ausführungsform von dem Handschuhfachkasten 10 aufgenommen wird. Die Stützstruktur 12 besteht im Wesentlichen aus einem lang gestreckten rohrförmigen Stoßfänger 20, welcher sich horizontal über die lichte Weite des Handschuhfachkastens 10 erstreckt und sich dabei vorzugsweise über seine gesamte Länge in unmittelbarer Nähe zu der Innen- oder Rückseite des Handschuhfachkastendeckels 14 des Handschuhfachkastens 10 befindet. Der Stoßfänger 20 ist dabei im Wesentlichen horizontal und quer zur Fahrtrichtung des Fahrzeugs ausgerichtet und über zwei in Längsrichtung des Stoßfängers 20 beabstandete, schräg stehende Streben 22 an einer ebenfalls quer zur Fahrtrichtung des Fahrzeugs ausgerichteten tragenden Querträgerstruktur 24 befestigt, welche ihrerseits mit der Tragstruktur des Kraftfahrzeugs, vorzugsweise mit den beiden A-Säulen (nicht dargestellt) desselben, kraftschlüssig verbunden ist. Der Stoßfänger 20 und die schräg stehenden Streben 22 bilden somit in gewisser Weise einen an der Querträgerstruktur 24 befestigten Aufprallbügel, über den die Kräfte F, welche während eines Aufpralls auf die Stützstruktur 12 einwirken, zuverlässig in die Querträgerstruktur 24 und damit in die Tragstruktur des Kraftfahrzeugs abgeleitet werden können. Es besteht somit eine geschlossene Kraftkette, über die in die Stützstruktur 12 eingeleitete Aufprallkräfte F in die Tragstruktur des Kraftfahrzeugs abgeleitet werden können.

Da die Stützstruktur 20 im Wesentlichen im Inneren des Handschuhfachkastens 10 angeordnet ist, besitzen der Handschuhfachkasten 10 und insbesondere dessen Deckel 14 eine im Vergleich zu der Stützstruktur 12 geringe Festigkeit und/oder Steifigkeit, so dass die Aufprallkräfte F, die im Crashfall beispielsweise über die Knie eines Beifahrers aufgebracht werden, gezielt in die Stützstruktur 12 und von dort über die Querträgerstruktur 24 in die Tragstruktur des Kraftfahrzeugs abgeleitet werden können.

Die Armaturentafel-Baugruppe der Fig. 1 eignet sich beispielsweise für ein für den US-amerikanischen Markt bestimmtes Kraftfahrzeug, da hier die Stützstruktur 12 in Form des Stoßfängers 20 und der schräg stehenden Streben 22 dafür sorgt, dass auf den Handschuhfachkasten 10 einwirkende Aufprallkräfte F über eine geschlossene Kraftkette in die Tragstruktur des Kraftfahrzeugs abgeleitet werden können und Aufprallenergie von der Stützstruktur 12 aufgenommen wird, d.h. die Stützstruktur 12 die gewünschte Rückhaltefunktion erfüllen kann. Da jedoch beispielsweise europäische Sicherheitsbestimmungen nicht von einem unangegurteten Dummy, sondern von einem angegurteten Dummy ausgehen, welcher folglich bei einem Unfall bereits durch den Sicherheitsgurt zurückgehalten wird, kann bei einem für den europäischen Markt bestimmten Kraftfahrzeug die Stützstruktur 12 zumindest teilweise entfallen, was jedoch in Bezug auf den Handschuhfachkasten 10 als solchen keinerlei Modifikationen mit sich bringt.

Als besonders vorteilhaft kann es sich erweisen, die Stützstruktur 12 aus dem Stoßfänger 20 und den Streben 22 modular aufzubauen, was bedeutet, dass zumindest eines dieser Elemente entfernbar und/oder austauschbar bzw. ersetzbar ausgebildet ist, so dass durch dessen Entfernung bzw. Ersetzung die Kraftkette unterbrochen werden kann. So kann es beispielsweise bei der in der Fig. 1 dargestellten Ausführungsform einer Armaturentafel-Baugruppe ausreichen, eine oder beide der Streben 22 als lös- und/oder austauschbares Element auszubilden, da durch das Entfallen zumindest einer der Streben 22 der Kraftfluss von dem Stoßfänger 20 auf die Querträgerstruktur 24 unterbrochen wird. Alternativ kann der Stoßfänger 20 ersatzlos entfernt oder durch ein Bauteil geringerer Steifigkeit ersetzt werden, welches keine oder kaum Kräfte in die Streben 22 einleiten kann, d.h. den Knien oder Beinen eines Fahrzeuginsassen bei einem Unfall einen relativ geringen Widerstand entgegensetzt, so dass die Belastungen z.B. der Oberschenkelknochen problemlos unterhalb der jeweils geltenden Grenzwerte gehalten werden können.

Die in der Fig. 1 dargestellte Ausführungsform einer Armaturentafel-Baugruppe, welche in der dargestellten Ausführungsform speziell für den US-amerikanischen Markt ausgebildet ist, kann also dadurch, dass beispielsweise die gesamte Stützstruktur 12 oder auch nur eines ihrer Elemente 20, 22 entfällt, gezielt beispielsweise für den europäischen Markt modifiziert werden, da dann im Bereich des Handschuhfachkastens 10 insofern keine "harten", also einen relativ hohen Widerstand entgegensetzenden, Strukturen mehr vorhanden sind.

Obwohl der Stoßfänger 20 in der Fig. 1 als Rundrohr und die Streben 22 als Rechteckrohre ausgebildet sind, können diese Bauteile entsprechend den jeweiligen Crash- bzw. Deformationsanforderungen auch andere Querschnitte aufweisen. Beispielsweise können der Stoßfänger 20 und die Streben 22 einen U-förmigen, L-förmigen, C-förmigen, T-förmigen, I-förmigen oder anderen Querschnitt aufweisen, welcher geeignet ist, die Aufprallkräfte F zuverlässig in die Querträgerstruktur 24 und von dort in die Tragstruktur des Kraftfahrzeugs weiterzuleiten. Ebenfalls erlaubt es der erfindungsgemäße Aufbau der Armaturentafel-Baugruppe, die Stützstruktur 12 aus beliebigen Materialien wie beispielsweise Stahl, Aluminium, Magnesium, Kunststoff, (Glas-)faserverstärktem Kunststoff oder anderen Werkstoffen auszubilden. Darüber hinaus ist es im Unterschied zu der dargestellten Ausführungsform nicht zwangsweise erforderlich, dass der Stoßfänger 20 und die Streben 22 über ihre gesamte Länge hinweg die gleiche Profilstärke und damit das gleiche Flächenträgheitsmoment aufweisen. Vielmehr wäre es beispielsweise denkbar, den stark auf Biegung beanspruchten mittleren Bereich des Stoßfängers 20 mit einem größeren Querschnittprofil und folglich mit einem größeren Flächenträgheitsmoment auszubilden als die Endabschnitte des Stoßfängers 20, welche weniger stark auf Biegung beansprucht werden.

Obwohl es sich als vorteilhaft erweisen kann, die Stützstruktur 12 modular aufzubauen, kann es sich in Abhängigkeit von den jeweiligen Gegebenheiten z. B. aus Stabilitätsgründen als vorteilhaft erweisen, die Stützstruktur 12 aus Stoßfänger 20 und Streben 22 als einstückiges, integrales Bauteil auszubilden, da in diesem Falle die in dem Stoßfänger 20 auftretenden Biegemomente in Form von Einspannmomenten über die Streben 22 auf die Querträgerstruktur 24 und von dort in die Tragstruktur des Kraftfahrzeugs übertragen werden können.

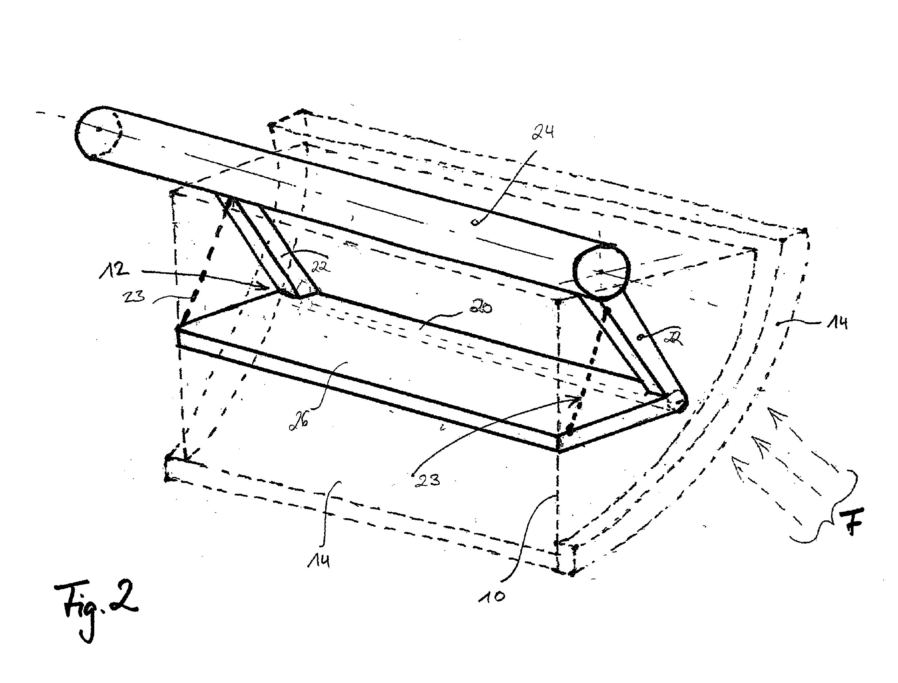

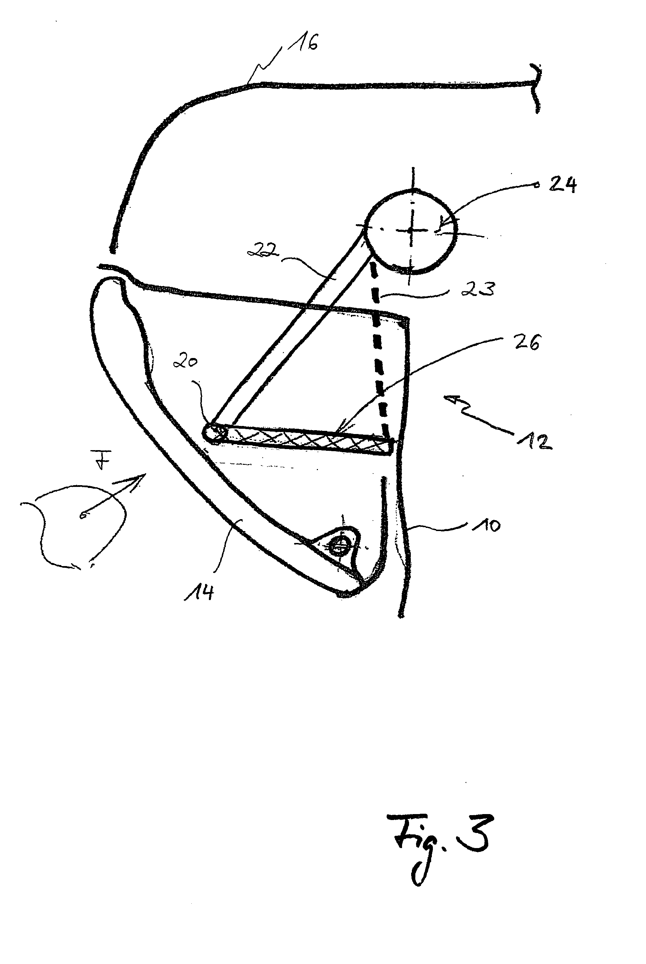

Wie den Fig. 2 und 3 entnommen werden kann, welche eine zweite Ausführungsform einer erfindungsgemäßen Armaturentafel-Baugruppe zeigen, kann in den Handschuhfachkasten 10 etwa auf halber Höhe ein Zwischenboden 26 integriert sein, wobei sich der Stoßfänger 20 auf derselben Höhe wie der Zwischenboden 26 befindet. Mit anderen Worten ist der Stoßfänger 20 also in der Ebene des Zwischenbodens 26 des Handschuhfachkastens 10 angeordnet, so dass durch den Stoßfänger 20 die Zugänglichkeit zu dem oberen und unteren Bereich des Handschuhfachkastens 10 nicht beeinträchtigt wird. Darüber hinaus kann der Stoßfänger 20 beispielsweise in der Fig. 2 und 3 nicht dargestellte Leuchtmittel aufnehmen, um damit die unterhalb und/oder oberhalb des Zwischenbodens 26 befindlichen Handschuhfachräume ausleuchten zu können. Der Stoßfänger 20 dient somit nicht nur zur Energieabsorption bzw. zur Erfüllung einer Rückhaltefunktion, sondern gleichzeitig als Leuchtmittelaufnahme, wodurch dessen Systemintegrationsgrad gesteigert wird.

Der Stoßfänger 20 kann als ein von dem Zwischenboden 26 separates Bauteil ausgeführt sein. Gemäß einer bevorzugten Ausführungsform ist jedoch vorgesehen, dass der Stoßfänger 20 als integraler Abschnitt, insbesondere als integraler Kantenabschnitt, des Zwischenbodens 26 ausgebildet ist, so dass durch die Steifigkeit des Stoßfängers 20 die Steifigkeit des Zwischenbodens 26 in der erwünschten Weise erhöht wird. Hierzu kann es sich insbesondere als vorteilhaft erweisen, den Zwischenboden 26 als verstärkte Struktur auszubilden, welche ihrerseits beispielsweise über zusätzlich vorgesehene Streben 23 die Aufprallkräfte F in die Querträgerstruktur 24 einleiten kann. So können beispielsweise zusätzlich zu den bereits zuvor unter Bezugnahme auf die Fig. 1 beschriebenen Druckstreben 22 die beiden weiteren in Längsrichtung des Stoßfängers 20 beabstandeten Streben 23 vorgesehen sein, welche das in Fahrtrichtung vordere Ende des Zwischenbodens 26 mit der Querträgerstruktur 24 verbinden. Durch die Streben 22, 23 und die seitlichen Kanten des Zwischenbodens 26 werden somit ebene Fachwerkrahmen gebildet, über die die auf den Zwischenboden 26 einwirkenden Aufprallkräfte F zuverlässig in die Querträgerstruktur 24 und von dort in die Tragstruktur des Kraftfahrzeugs abgeleitet werden können.

Die zusätzlichen Streben 23 können dabei entsprechend den Streben 22 als entfernbare und/oder austauschbare bzw. ersetzbare Elemente ausgebildet sein, so dass durch Verzicht auf bzw. Ausbau zumindest einer der Streben 22, 23 oder durch Verzicht auf bzw. Ausbau des Stoßfänger 20 die Steifigkeit der Stützstruktur 12 der in Fig. 2 dargestellten Armaturentafel-Baugruppe in der gewünschten Weise reduziert wird. Somit kann die in der Fig. 2 dargestellte Armaturentafel-Baugruppe durch Entfernung bzw. Ersetzung eines der Elemente der Stützstruktur 12, die die Streben 22, 23, den Stoßfänger 20 sowie den Zwischenboden 26 umfasst, für ein für den europäischen Markt bestimmtes Kraftfahrzeug gezielt modifiziert werden.

Wie ferner der Fig. 3 entnommen werden kann, erlaubt es die dargestellte Ausführungsform, den Handschuhfachkasten 10 in die Armaturentafel 16 zu integrieren bzw. einstückig mit dieser auszubilden. Mit anderen Worten ist es möglich, in der Armaturentafel 16 eine Aussparung in Form des Handschuhfachkastens 10 auszubilden, so dass kein separater Handschuhfachkasten 10 vorgehalten und montiert werden muss.

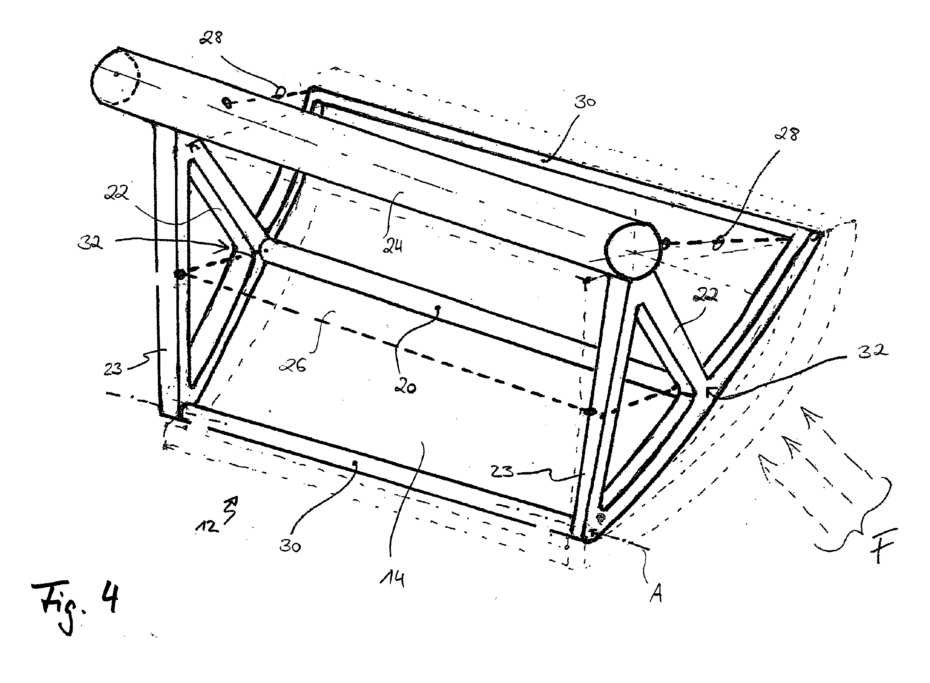

Die Fig. 4 zeigt eine modifizierte Ausführungsform der in den Fig. 2 und 3 gezeigten Armaturentafel-Baugruppe, bei der die seitlichen Rahmen der Stützstruktur eine derartige Gestalt aufweisen, dass durch sie der Deckel 14 des Handschuhfachkastens 10 im geschlossenen Zustand unterstützt wird. So weisen die Rahmen jeweils einen im Wesentlichen senkrecht zu der jeweiligen Strebe 22 verlaufenden, leicht gekrümmten Flanschträger 32 auf, welcher derart auf die Form des Handschuhfachkastendeckels 14 abgestimmt ist, dass dieser im geschlossenen Zustand an dem Flanschträger 32 anliegen kann. Ferner weisen die zusätzlichen Streben 23 gegenüber der in den Fig. 2 und 3 dargestellten Ausführungsform eine größere Länge auf, so dass die Streben 23 nicht nur mit dem optionalen Zwischenboden 26, sondern auch mit dem jeweiligen Flanschträger 32 verbunden werden können. Darüber hinaus können die beiden Seitenrahmen optionale austauschbare und annähernd horizontal ausgerichtete Stützstreben 28 umfassen, welche ihrerseits lösbar mit der Querträgerstruktur 24 und den frei auskragenden Enden der jeweiligen Flanschträger 32 verbunden werden können.

Zwar sind in der dargestellten Ausführungsform nur die horizontalen Stützstreben 28 als optionale und austauschbare Elemente dargestellt. Die Streben 22, 23 oder der Flanschträger 32 können jedoch ebenfalls als aus der Stützstruktur 12 herausnehmbare Elemente ausgebildet sein, so dass durch Verzicht auf oder Ersatz zumindest eines dieser Bauelemente die Steifigkeit der Stützstruktur 12 verringert werden kann, um so beispielsweise in einem für den europäischen Markt bestimmten Kraftfahrzeug zum Einsatz kommen zu können.

Wie der Fig. 4 ferner entnommen werden kann, sind die seitlichen Rahmen der Stützstruktur 12 nicht nur durch den Stoßfänger 20, sondern auch durch zwei weitere Koppelriegel 30 miteinander verbunden, welche lösbar an den Enden der jeweiligen Flanschträger 32 angebracht sind und somit bei Bedarf zur Verringerung der Steifigkeit der Stützstruktur 12 ebenfalls entfernt oder ersetzt werden können. Die Streben 22, 23, 28, der Flanschträger 32, der Stoßfänger 20 und die Koppelriegel 30 bilden somit zusammen ein räumliches Stabtragwerk, dessen Steifigkeit gezielt dadurch verringert werden kann, dass einzelne Stäbe des Stabtragwerks entfernt bzw. bewusst nicht vorgesehen werden.

Wie der Fig. 4 außerdem entnommen werden kann, erstrecken sich die Koppelriegel 30 entlang der oberen bzw. unteren Kante des Handschuhfachkastendeckels 14 des Handschuhfachkastens 10. Da der Deckel 14 zum Öffnen jedoch gerade um ihre obere oder untere Kante verschwenkt werden muss, können die Koppelriegel 30 gleichzeitig als Schwenkachse für den Handschuhfachkastendeckel 14 dienen. So kann beispielsweise der Handschuhfachkastendeckel 14 über einen geeigneten Scharniermechanismus gelenkig an dem unteren Koppelriegel 30 angelenkt werden, so dass der Handschuhfachkastendeckel 14 um die von dem unteren Koppelriegel 30 definierte Klappachse A auf- und zugeklappt werden kann.

Die Koppelriegel 30 erfüllen somit nicht nur eine Aussteifungsfunktion, sondern dienen gleichzeitig als Scharnierbauteil, wodurch der Integrationsgrad der Koppelriegel 30 in das System der Stützstruktur 12 der erfindungsgemäßen Armaturentafel-Baugruppe erhöht werden kann.

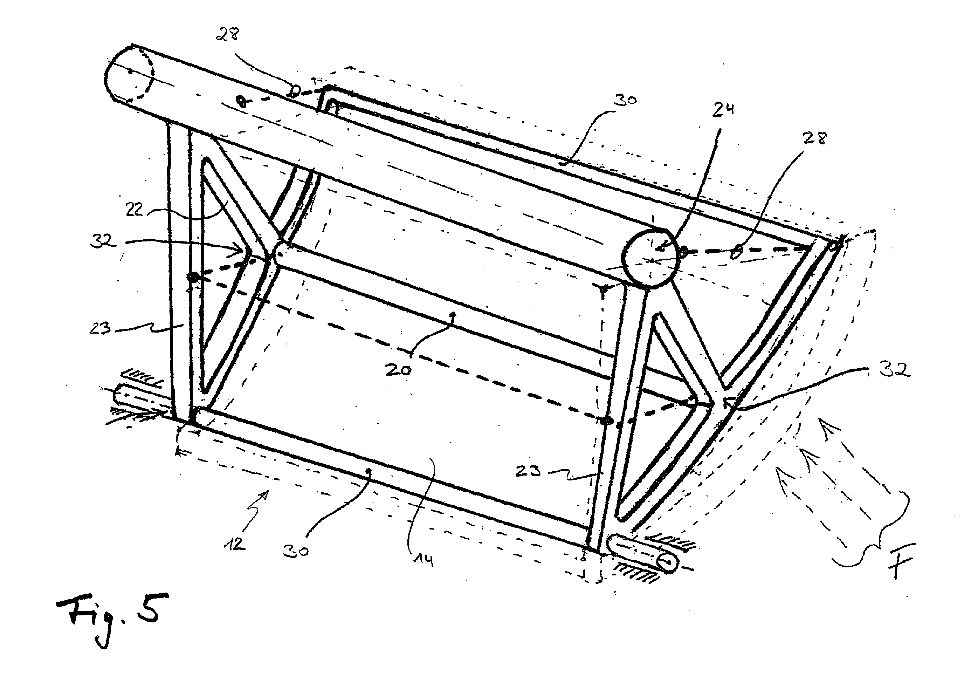

Die in der Fig. 5 dargestellte Ausführungsform einer Armaturentafel-Baugruppe entspricht im Wesentlichen der in der Fig. 4 dargestellten Ausführungsform mit dem Unterschied, dass der untere Koppelriegel 30 - anders als bei der in der Fig. 4 dargestellten Ausführungsform - um seine Längsachse drehbar an den beiden Seitenrahmen gelagert ist. Der Deckel 14 des Handschuhfachkastens 10 kann folglich drehstarr mit dem unteren Koppelriegel 30 verbunden sein, da die Schwenkbarkeit des Handschuhfachkastendeckels 14 bereits durch die gelenkige Lagerung des unteren Koppelriegels 30 gewährleistet wird.

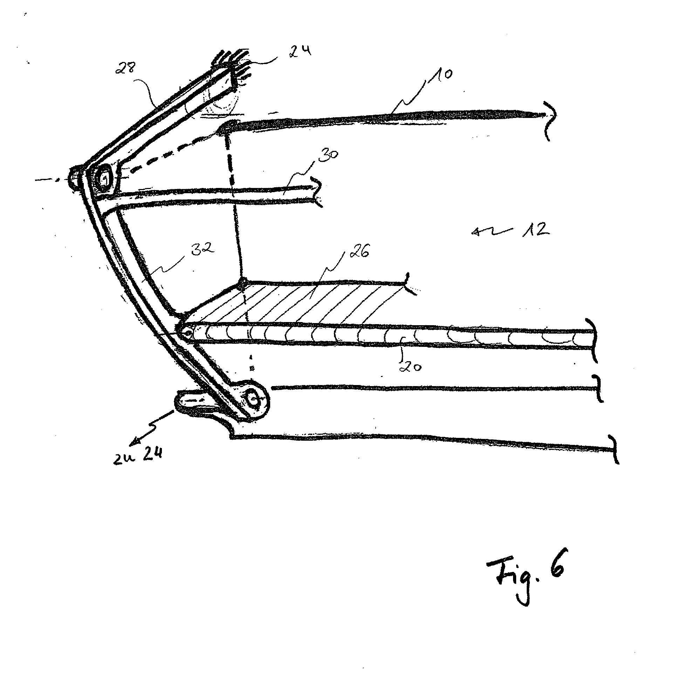

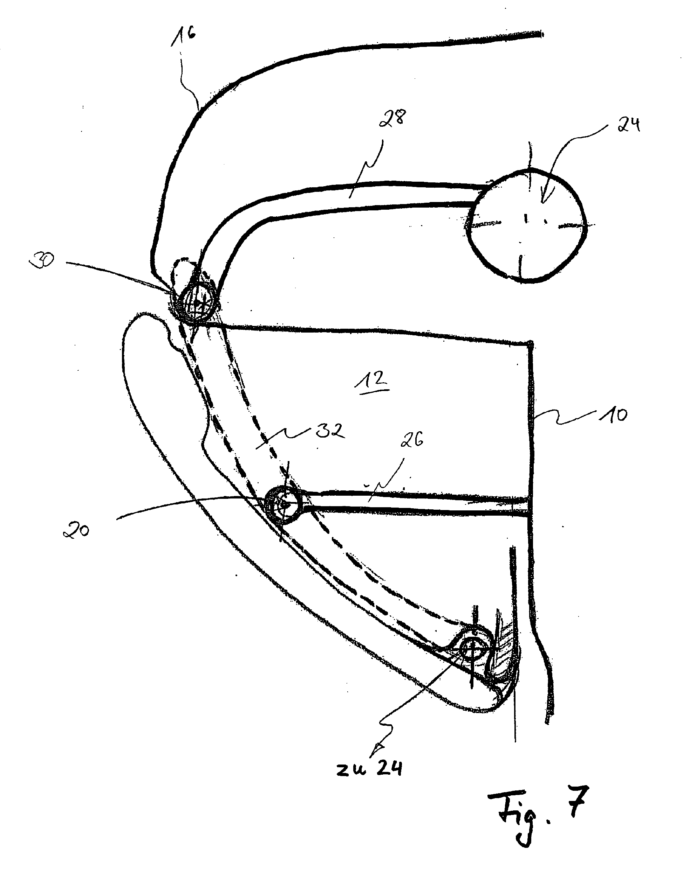

Die Fig. 6 und 7 zeigen zwei weitere Ausführungsformen einer erfindungsgemäßen Armaturentafel-Baugruppe, welche gegenüber der in der Fig. 4 dargestellten Ausführungsform im Wesentlichen jeweils dadurch modifiziert wurden, dass sowohl die Streben 22 als auch die verlängerten Streben 23 sowie der untere Koppelriegel 30 nicht implementiert wurden. Vielmehr ist dafür bei den in den Fig. 6 und 7 gezeigten Ausführungsformen das untere freie Ende des gekrümmten Flanschträgers 32, welches bei der in der Fig. 4 dargestellten Ausführungsform mit dem unteren Koppelriegel 30 verbunden ist, mittelbar mit der Querträgerstruktur 24 verbunden, wie dies in den Fig. 6 und 7 schematisch angedeutet ist.

Davon abgesehen unterscheiden sich die in den Fig. 6 und 7 dargestellten Ausführungsformen lediglich dadurch voneinander, dass bei der in der Fig. 6 dargestellten Ausführungsform die optionale Stützstrebe 28 einstückig mit dem Flanschträger 32 verbunden ist, wohingegen die in der Fig. 7 dargestellte Ausführungsform zwei separat handhabbare Elemente aufweist, welche zur Erhöhung der Systemflexibilität lösbar miteinander verbunden sind.

Wie ferner insbesondere der Fig. 7 entnommen werden kann, handelt es sich erfindungsgemäß bei dem Handschuhfachkasten 10 sowie dem Handschuhfachkastendeckel 14 um eine von der Stützstruktur 12 funktionsmäßig entkoppelte Einheit, welche um die Stützstruktur 12 gewissermaßen herumgebaut und mit der Armaturentafel verbunden ist. Der Konstrukteur ist durch diese Entkoppelung des Handschuhfachkasten 10 sowie dessen Deckel 14 von der Stützstruktur 12 beim Entwurf der Armaturentafel 16 sowie des damit verbundenen Handschuhfachkastens 10 verhältnismäßig frei, solange gewährleistet ist, dass die Stützstruktur 12 von der Armaturentafel 16 einschließlich des Handschuhfachkastens 10 sowie dessen Deckel 14 verdeckt bzw. aufgenommen wird.

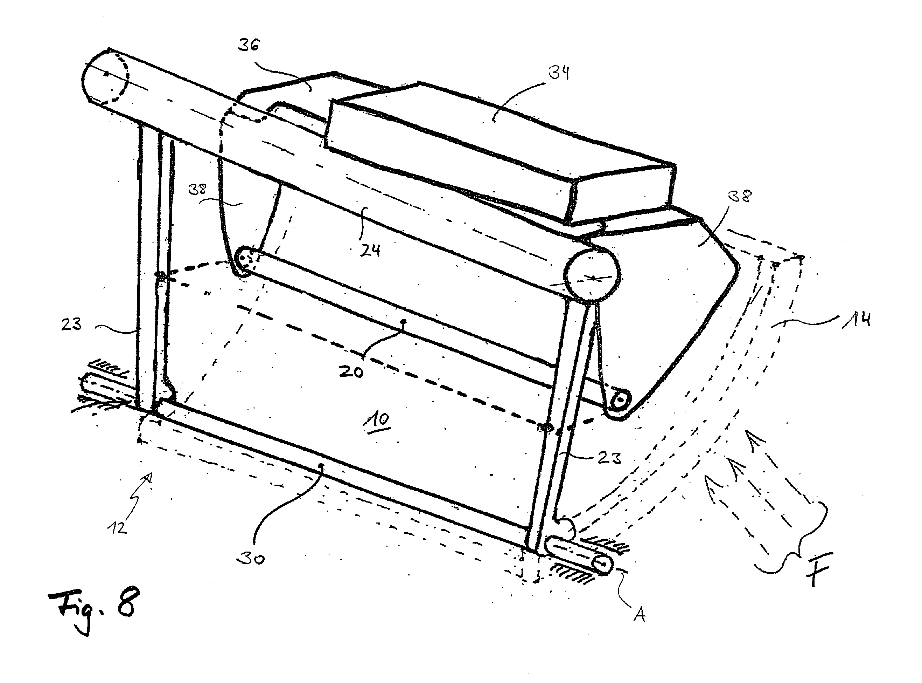

Die in der Fig. 8 dargestellte Ausführungsform einer erfindungsgemäßen Armaturentafel-Baugruppe basiert auf der in der Fig. 5 dargestellten Ausführungsform, wobei im Unterschied dazu der Stoßfänger 20 jedoch nicht mit den Streben 22 sowie den Flanschträgern 32 verbunden ist. Vielmehr wurde bei der in der Fig. 8 dargestellten Ausführungsform auf die Implementierung der schräg stehenden Streben 22 sowie der Flanschträger 32 in die Stützstruktur 12 verzichtet, da zur Übertragung der Aufprallkräfte F in die Querträgerstruktur 24 eine Kraftkette über einen ohnehin vorhandenes Luftsackmodul und insbesondere dessen Luftsackträger 36 realisiert werden kann, wodurch der Systemintegrationsgrad erhöht wird. Bei dem Luftsackträger 36 handelt es sich um eine den oberen Abschluss des Handschuhfachkastens 10 definierende Platte, auf der ein Luftsackmodul 34 befestigt ist. Um eine wirksame Kraftkette zwischen dem Stoßfänger 20 und der Querträgerstruktur 24 herstellen zu können, weist der Luftsackträger 36 an zwei in Fahrzeugquerrichtung gegenüberliegenden Seiten jeweils einen nach unten frei auskragenden Flansch 38 auf, an dessen unterem Ende der Stoßfänger 20 lösbar befestigt ist. Die Luftsackträgerflansche 38 können dabei entweder unmittelbar an der Querträgerstruktur 24 oder mittelbar über den Luftsackträger 26 an der Querträgerstruktur 24 befestigt sein, so dass die bei einem Crash auf den Stoßfänger 20 einwirkenden Aufprallkräfte F über eine geschlossene Kraftkette in die Querträgerstruktur 24 abgeleitet werden können.

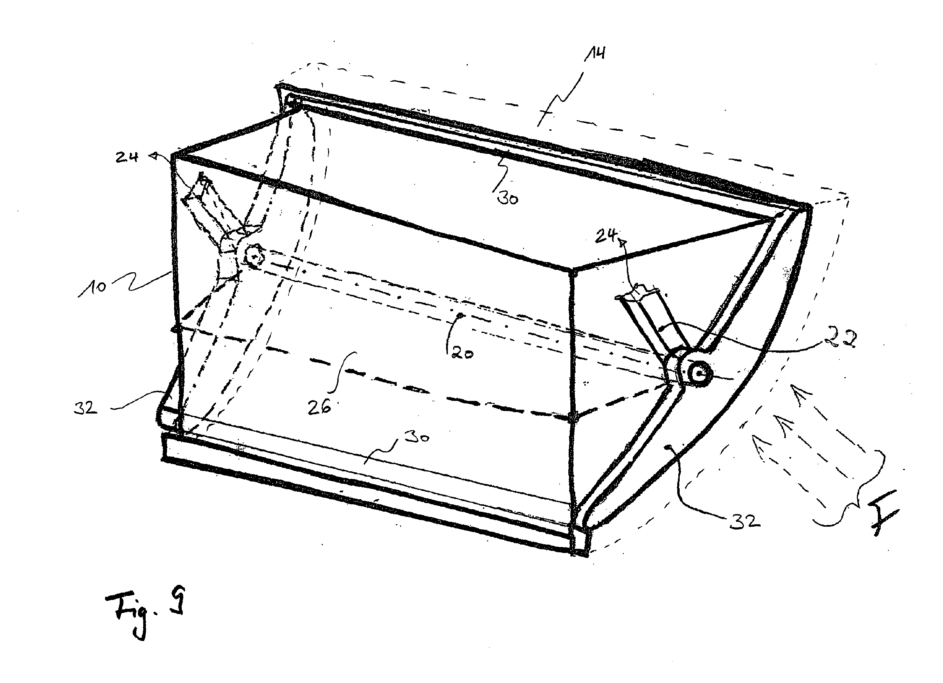

Die in der Fig. 9 dargestellte Ausführungsform einer erfindungsgemäßen Armaturentafel-Baugruppe basiert im Wesentlichen auf der in der Fig. 4 dargestellten Ausführungsform, wobei im Unterschied dazu auf die Implementierung der optionalen Stützstreben 28 sowie der verlängerten zusätzlichen Streben 23 in die jeweiligen Seitenrahmen der Stützstruktur 12 verzichtet wurde. In der dargestellten Ausführungsform sind somit die Flanschträger 32 ausschließlich über die schräg stehenden Streben 22 mit der hier (und auch in anderen Figuren) durch die Pfeile angedeuteten Querträgerstruktur 24 verbunden, weshalb die Flanschträger 32 gegenüber der in der Fig. 4 dargestellten Ausführungsform verstärkt ausgebildet sind, um auftretende Aufprallkräfte F zuverlässig aufnehmen und ableiten zu können. Darüber hinaus sind bei der in der Fig. 9 dargestellten Ausführungsform die Streben 22 in die Seitenwände des Handschuhfachkastens integriert und einstückig mit diesen ausgebildet, wodurch diese eine Verstärkung in Form von integrierten Rippen erfahren.

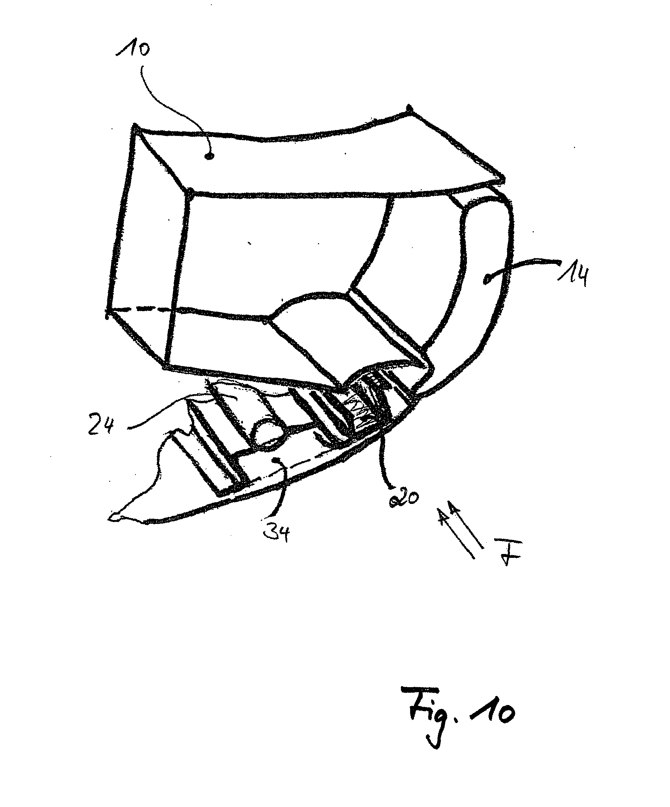

Die in der Fig. 10 dargestellte Ausführungsform einer erfindungsgemäßen Armaturentafel-Baugruppe unterscheidet sich von den vorstehend beschriebenen Ausführungsformen im Wesentlichen dadurch, dass der Stoßfänger 20 nicht innerhalb des Handschuhfachkastens 10, sondern außerhalb, genauer gesagt unterhalb des Unterbodens 27, angeordnet ist.

Der Stoßfänger 20 ist hier ebenfalls über nicht dargestellte Streben mit der Querträgerstruktur 24, welche hier ebenfalls unterhalb des Unterbodens 27 des Handschuhfachkastens 10 angeordnet ist, verbunden, so dass auf den Stoßfänger 20 einwirkende Aufprallkräfte F über eine geschlossene Kraftkette in die Tragstruktur des Kraftfahrzeugs abgeleitet werden können. Auch bei der in der Fig. 10 dargestellten Ausführungsform ist somit die Stützstruktur 12 von dem Handschuhfachkasten 10 entkoppelt, so dass dieser in der gewünschten Weise mit einer vergleichsweise geringen Steifigkeit ausgebildet werden kann.

Da trotz des Vorhandenseins der von dem Handschuhfachkasten 10 entkoppelten Stützstruktur 12 der Handschuhfachkasten 10 entsprechend seiner Steifigkeit im Crashfall Aufprallenergie absorbiert, kann es sich als vorteilhaft erweisen, an dem Handschuhfachkasten 10 zumindest einen Energieabsorptionsträger 40 zu befestigen, der zumindest mittelbar mit der Tragstruktur des Kraftfahrzeugs verbunden ist und der durch die in den Handschuhfachkasten 10 eingeleiteten Aufprallkräfte verformt wird. Durch derartige Energieabsorptionsträger lassen sich somit zum einen die Steifigkeitseigenschaften des Handschuhfachkastens 10 direkt beeinflussen, so dass durch gezielte Anordnung von Energieabsorptionsträgern 40 der Handschuhfachkasten 10 speziell an die in einzelnen Ländern geltenden Sicherheitsbestimmungen angepasst werden kann. Da die Energieabsorptionsträger 40 die von dem Handschuhfachkasten 10 aufgenommenen Aufprallkräfte in Verformungen umsetzen, ist es zum anderen möglich, die Tragstruktur aus Materialien mit verhältnismäßig geringer Bruchfestigkeit, wie beispielsweise aus Magnesium, zu fertigen.

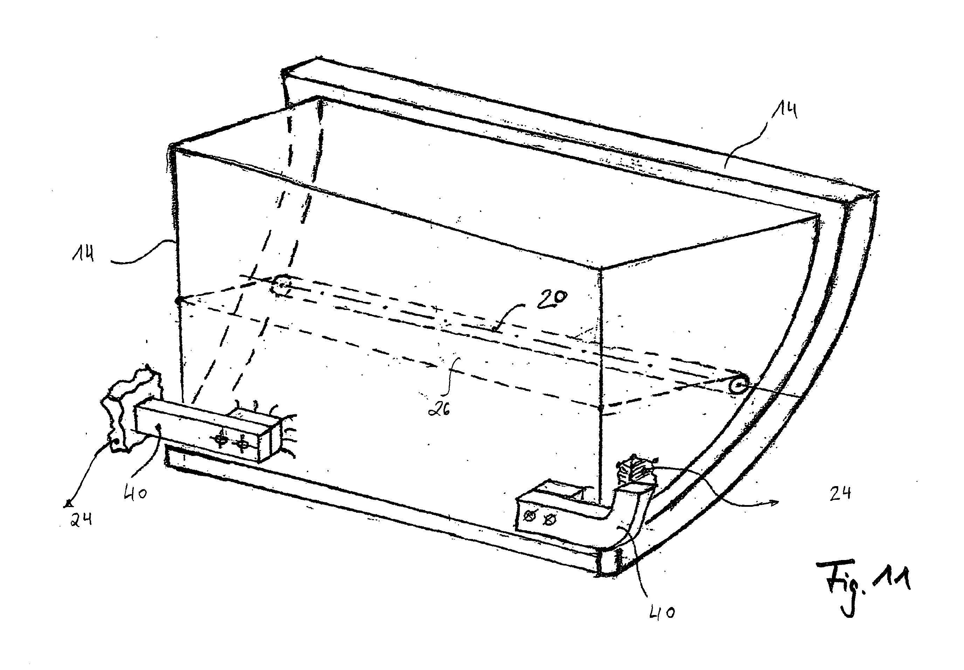

Wie beispielsweise der in der Fig. 11 dargestellten Ausführungsform einer erfindungsgemäßen Armaturentafel-Baugruppe entnommen werden kann, sind an der Rückwand des Handschuhfachkastens 10 zwei Energieabsorptionsträger 40 befestigt, welche ihrerseits biegesteif mit der Querträgerstruktur 24 mittelbar verbunden sind. Da es sich bei den Energieabsorptionsträgern 40 um frei auskragende Biegeträger handelt, sind diese in der Lage, die von dem Handschuhfachkasten 10 aufgenommenen Aufprallkräfte in Verformungen umzusetzen, was einer Versteifung des Handschuhfachkastens 10 gleichkommt.

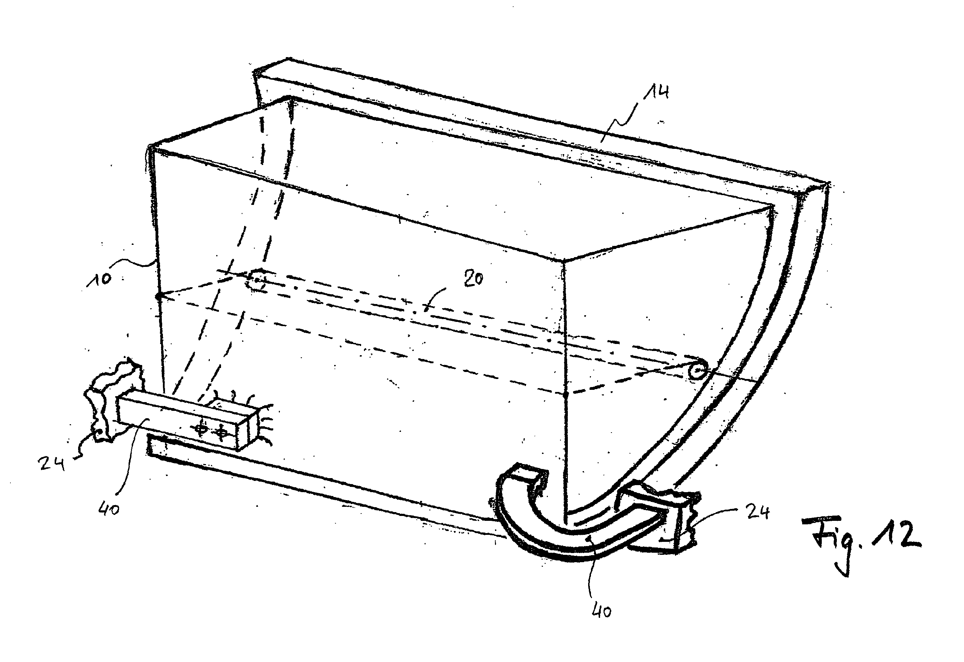

Im Unterschied zu der in der Fig. 11 dargestellten Ausführungsform ist bei der in der Fig. 12 dargestellten Ausführungsform einer Armaturentafel-Baugruppe der in Fahrtrichtung linke Energieabsorptionsträger 40 (in der Fig. 12 rechts dargestellt) U-förmig gebogen. Anders als der in der Fig. 11 rechts dargestellte Energieabsorptionsträger 40 weist der U-förmig gebogene Energieabsorptionsträger 40 der Fig. 12 somit keinen nach oben ragenden Trägerabschnitt auf, welcher im Crashfall auf Torsion beansprucht wird. Vielmehr treten im Crashfall in dem U-förmig gebogenen Energieabsorptionsträger 40 der Fig. 12 nur Normal- und Querkräfte sowie Biegemomente auf, so dass keine Berücksichtigung von Torsionsmomenten bei dessen Auslegung erforderlich ist.

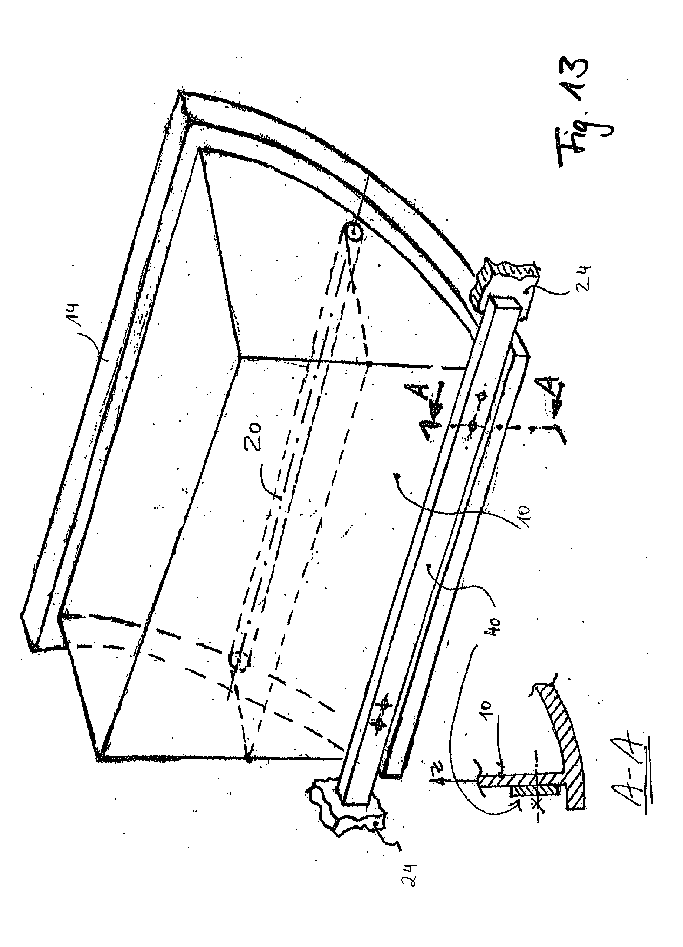

Die in der Fig. 13 dargestellte Ausführungsform unterscheidet sich von der in der Fig. 11 dargestellten Ausführungsform im Wesentlichen lediglich dadurch, dass anstelle zweier separater Energieabsorptionsträger 40 nur ein durchlaufender Energieabsorptionsträger 40 vorgesehen ist. Da der in der Fig. 13 dargestellte einzige Energieabsorptionsträger 40 an zwei Stellen mittelbar an der Querträgerstruktur 24 befestigt ist, womit bereits ein statisch bestimmtes System vorliegt, kann grundsätzlich auf eine biegesteife Anbringung des Energieabsorptionsträgers 40 an seinen beiden Lagerpunkten verzichtet werden. Um jedoch eine zusätzliche Versteifung des Handschuhfachkastens 10 zu erzielen, können die beiden freien Enden des Energieabsorptionsträgers 40 jedoch auch biegesteif mittelbar an der Querträgerstruktur 24 eingespannt werden, was zu einem statisch überbestimmten System und somit zu der gewünschten zusätzlichen Versteifung führt. Zusätzlich zu der Energieabsorptionsfunktion dienen die Energieabsorptionsträger 40 ferner als Positionierungs- und Montagehilfen für den Handschuhfachkasten 10, an denen dieser letztendlich fixiert werden kann.

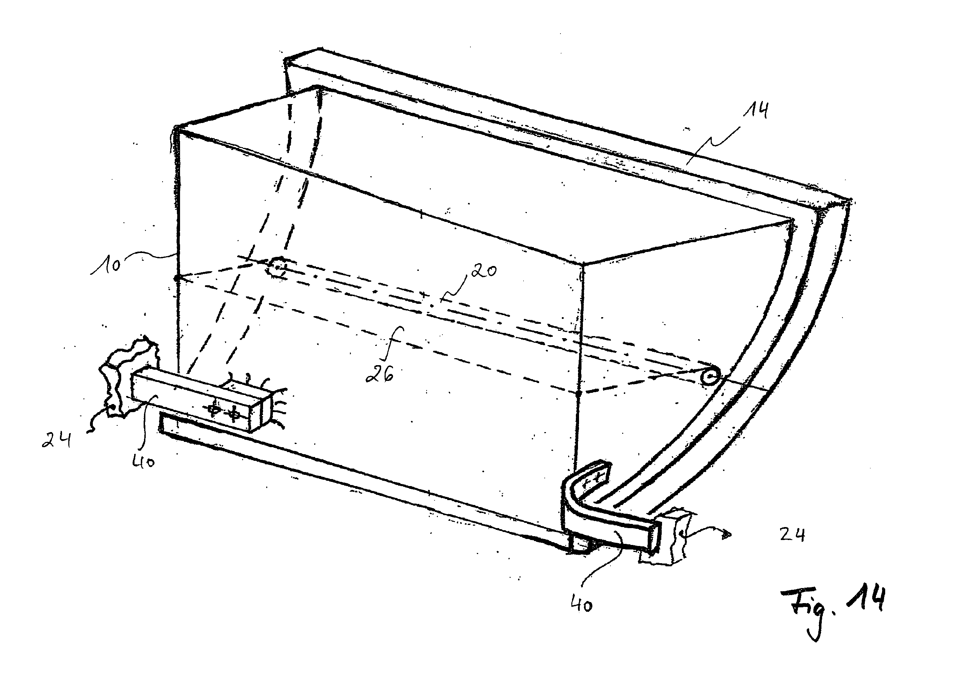

Die in der Fig. 14 dargestellte Ausführungsform einer erfindungsgemäßen Armaturentafel-Baugruppe unterscheidet sich von der in der Fig. 12 dargestellten Ausführungsform im Wesentlichen lediglich dadurch, dass der in der Figur rechts dargestellte Energieabsorptionsträger 40 keine U-förmige, sondern eine winkelförmige Gestalt aufweist. Außerdem sind die Flachseiten hier vertikal orientiert, wohingegen Fig. 12 horizontal liegende Flachseiten vorsieht. Ferner erfolgt die Anbringung seitlich, während Fig. 12 eine Anbringung an der Rückseite des Handschuhfachkastens 10 vorsieht.

Die Energieabsorptionsträger 40 können jedoch nicht nur unterschiedliche Formen besitzen, sondern auch je nach gewünschter Steifigkeit unterschiedliche Querschnitte aufweisen oder aus unterschiedlichen Materialien gefertigt sein, da durch die individuellen E-Moduli der jeweiligen Materialien ebenfalls die Steifigkeitseigenschaften der Energieabsorptionsträger 40 und damit auch diejenigen des Handschuhfachkastens 10 individuell eingestellt werden können.

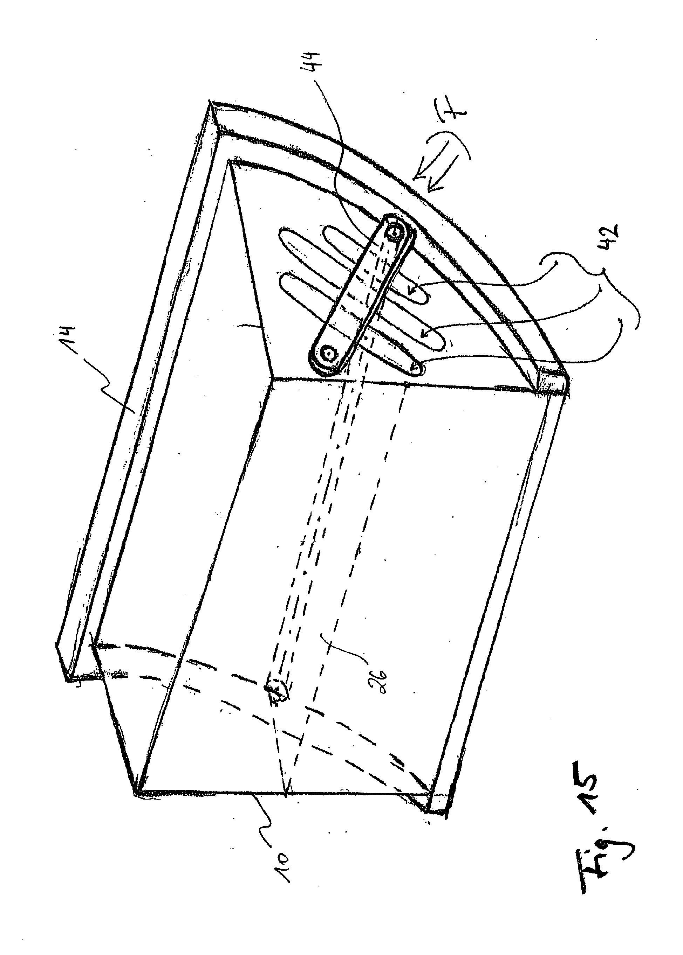

Eine weitere Möglichkeit zur Beeinflussung der Steifigkeitseigenschaften des Handschuhfachkastens 10 ist in der Fig. 15 veranschaulicht. Wie dieser Ausführungsform einer erfindungsgemäßen Armaturentafel-Baugruppe entnommen werden kann, weisen die Seitenwände des Handschuhfachkastens 10 mehrere parallel zueinander verlaufende Schlitze 42 auf, welche mit ihrer Längserstreckung im Wesentlichen senkrecht zur Richtung der Aufprallkräfte F ausgerichtet sind. Durch diese Schlitze 42 wird somit eine Reduzierung der Steifigkeit der Seitenwände des Handschuhfachkastens 10 erzielt, so dass dieser beispielsweise für ein für den europäischen Markt bestimmtes Kraftfahrzeug verwendet werden kann. Um den in der Fig. 15 dargestellten Handschuhfachkasten jedoch auch für den US-amerikanischen Markt verwenden zu können, können die Schlitze 42 durch eine mit der jeweiligen Seitenwand verbundene Kraftübertragungsbrücke 44 überbrückt werden, wodurch in der gewünschten Weise eine Versteifung der durch die Schlitze 42 hervorgerufenen "Knautschzone" erzielt wird.

Mit der erfindungsgemäßen Armaturentafel-Baugruppe lassen sich unter anderem die folgenden Vorteile und Wirkungen erzielen:

Im Unterschied zu der bekannten Herangehensweise, bei der für die unterschiedlichen Märkte von Grund auf individualisierte Armaturentafeln entworfen werden müssen, um den in den jeweiligen Ländern geltenden Crash- und Sicherheitsbestimmungen gerecht werden zu können, ermöglicht die vorliegende Erfindung die Verwendung eines stets gleich bleibenden Grundaufbaus, welcher für die jeweiligen Länder durch den Verzicht auf, den Austausch von und/oder die Ersetzung von einzelnen Strukturbauteilen modifiziert und somit an die jeweiligen Erfordernisse angepasst werden kann. Mit der hier vorgeschlagenen Armaturentafel-Baugruppe kann somit bei geringem Aufwand das Crashverhalten in Bezug auf unterschiedlichste Sicherheitsstandards optimiert werden.

Ferner ermöglicht die erfindungsgemäße Armaturentafel-Baugruppe ein verbessertes Energieabsorptions- bzw. Rückhalteverhalten.

Darüber hinaus ermöglicht die erfindungsgemäße Armaturentafel-Baugruppe eine Vergrößerung des nutzbaren Volumens des Handschuhfachs, da der Handschuhfachkasten selbst unabhängig von den jeweiligen Sicherheitsstandards mit oder ohne Integration von Knieairbags entworfen werden kann.

Ebenfalls kann mit der erfindungsgemäßen Armaturentafel-Baugruppe eine Reduzierung in Bezug auf Gewicht, Kosten und in der Armaturentafel wirkende Kräfte erreicht werden.

Obwohl die erfindungsgemäße Armaturentafel-Baugruppe in Bezug auf die Beifahrerseite beschrieben wurde, kann die Ausbildung der Armaturentafel-Baugruppe in entsprechender Weise auch für die Fahrerseite angewandt werden.

Durch die zumindest mittelbare Verbindung der Stützstruktur mit der Tragstruktur des Kraftfahrzeugs können die im Crashfall auf die Stützstruktur einwirkenden Kräfte sowohl über Torsion als auch über Biegung in die Tragstruktur des Kraftfahrzeugs eingeleitet werden, wodurch die auftretenden Kräfte besonders effektiv aufgenommen werden können.

Durch die Entkoppelung der Stützstruktur von dem Handschuhfachkasten kann die Stützstruktur individuell ausgelegt werden, ohne dabei an wie auch immer geartete Vorgaben gebunden zu sein, welche beispielsweise vom Design des Handschuhfachkastens ausgehen. Beispielweise können die einzelnen Komponenten der Stützstruktur individuelle Querschnittsformen mit bei Bedarf variierenden Flächenträgheitsmomenten aufweisen (z. B. U-, L-, T-, I- oder O-förmiger Querschnitt). Ferner können die einzelnen Stäbe der Stützstruktur aus Magnesium, Aluminium, Stahl, Kunststoff, (Glas-)faserverstärktem Kunststoff oder beliebigen weiteren Werkstoffen unter Einsatz verschiedenster Herstellungsverfahren gefertigt werden, so dass der Konstrukteur, welcher mit dem Entwurf einer Armaturentafel betraut ist, insofern verhältnismäßig frei ist.

### Bezugszeichenliste

- 10: Handschuhfachkasten
- 12: Stützstruktur
- 14: Handschuhfachkastendeckel
- 16: Armaturentafel
- 20: Stoßfänger
- 22: Streben
- 23: zusätzliche (verlängerte) Streben
- 24: Querträgerstruktur
- 26: Zwischenboden
- 27: Unterboden
- 28: optionale Stützstreben
- 30: Koppelriegel
- 32: Flanschträger
- 34: Luftsackmodul
- 36: Luftsackträger
- 38: Flansche
- 40: Energieabsorptionsträger
- 42: Schlitze
- 44: Kraftübertragungsbrücke

- A: Klappachse

## Patentansprüche

1. Armaturentafel-Baugruppe für ein Kraftfahrzeug, mit einem Handschuhfachkasten (10) und einer zusätzlichen Stützstruktur (12), welche zumindest mittelbar mit einer Tragstruktur (24) des Kraftfahrzeugs verbunden werden kann und im verbundenen Zustand derart in Bezug auf den Handschuhfachkasten (10) angeordnet ist, dass auf den Handschuhfachkasten (10) einwirkende Aufprallkräfte im Wesentlichen von der Stützstruktur (12) aufnehmbar sind.

2. Armaturentafel-Baugruppe nach Anspruch 1,
**dadurch gekennzeichnet, dass**
die Stützstruktur (12) zumindest teilweise von dem Handschuhfachkasten (10) aufgenommen ist.

3. Armaturentafel-Baugruppe nach Anspruch 1 oder 2,
**dadurch gekennzeichnet, dass**
der Handschuhfachkasten (10) eine im Vergleich zu der Stützstruktur (12) vernachlässigbare Festigkeit aufweist.

4. Armaturentafel-Baugruppe nach zumindest einem der vorstehenden Ansprüche,
**dadurch gekennzeichnet, dass**
die Stützstruktur (12) als räumliches Stabtragwerk ausgebildet ist.

5. Armaturentafel-Baugruppe nach zumindest einem der vorstehenden Ansprüche,
**dadurch gekennzeichnet, dass**
die Stützstruktur (12) zumindest mittelbar mit einer sich insbesondere zwischen den A-Säulen des Kraftfahrzeugs erstreckenden Querträgerstruktur (24) verbunden ist.

6. Armaturentafel-Baugruppe nach zumindest einem der vorstehenden Ansprüche,
**dadurch gekennzeichnet, dass**
die Stützstruktur (12) derart mit der Tragstruktur des Kraftfahrzeugs verbunden ist, dass eine geschlossene Kraftkette besteht, über die in die Stützstruktur (12) eingeleitete Aufprallkräfte in die Tragstruktur (24) des Kraftfahrzeugs ableitbar sind.

7. Armaturentafel-Baugruppe nach Anspruch 6,
**dadurch gekennzeichnet, dass**
die Stützstruktur (12) modular aufgebaut ist und zumindest ein entfernbares und/oder ersetzbares Element umfasst, welches derart ausgebildet und angeordnet ist, dass durch dessen Entfernung bzw. Ersetzung die Kraftkette unterbrochen ist.

8. Armaturentafel-Baugruppe nach zumindest einem der vorstehenden Ansprüche,
**dadurch gekennzeichnet, dass**
die Stützstruktur (12) einen vorzugsweise stabförmigen Stoßfänger (20) umfasst.

9. Armaturentafel-Baugruppe nach Anspruch 8,
**dadurch gekennzeichnet, dass**
der Stoßfänger (20) in der Ebene eines Zwischenbodens (26) oder eines Unterbodens (27) des Handschuhfachkastens (10) angeordnet ist.

10. Armaturentafel-Baugruppe nach Anspruch 9,
**dadurch gekennzeichnet, dass**
der Stoßfänger (20) als integraler Abschnitt, insbesondere als Kantenabschnitt, des Zwischenbodens (26) bzw. Unterbodens (27) ausgebildet ist.

11. Armaturentafel-Baugruppe nach Anspruch 9 oder 10,
**dadurch gekennzeichnet, dass**
der Zwischenboden (26) und/oder der Unterboden (27) des Handschuhfachkastens (10) als Bestandteil der Stützstruktur (12) ausgebildet ist/ sind.

12. Armaturentafel-Baugruppe nach zumindest einem der Ansprüche 8 bis 11,
**dadurch gekennzeichnet, dass**
die Stützstruktur (12) ferner zumindest zwei in Längsrichtung des Stoßfängers (20) beanstandete Streben (22, 23) umfasst, über die der Stoßfänger (20) vorzugsweise lösbar an einer sich insbesondere zwischen den A-Säulen des Kraftfahrzeugs erstreckenden Querträgerstruktur (24) abgestützt ist.

13. Armaturentafel-Baugruppe nach zumindest einem der Ansprüche 8 bis 12,
**dadurch gekennzeichnet, dass**
die Stützstruktur (12) ferner zumindest zwei in Längsrichtung des Stoßfängers (20) beabstandete Rahmen (22) umfasst, über die der Stoßfänger (20) vorzugsweise lösbar an einer sich insbesondere zwischen den A-Säulen des Kraftfahrzeugs erstreckenden Querträgerstruktur (24) abgestützt ist.

14. Armaturentafel-Baugruppe nach Anspruch 13,
**dadurch gekennzeichnet, dass**
die Rahmen (22) eine derartige Gestalt aufweisen, dass durch sie ein Deckel (14) des Handschuhfachs (10) im geschlossenen Zustand unterstützt ist.

15. Armaturentafel-Baugruppe nach Anspruch 13 oder 14,
**dadurch gekennzeichnet, dass**
die äußere Kontur der Rahmen (22) zumindest bereichsweise der Form der Seitenwände des Handschuhfachkastens (10) entspricht.

16. Armaturentafel-Baugruppe nach zumindest einem der Ansprüche 12 bis 15,
**dadurch gekennzeichnet, dass**
die Streben oder Rahmen (22, 23) durch zumindest einen parallel zu dem Stoßfänger (20) verlaufenden Koppelriegel (30) miteinander verbunden sind.

17. Armaturentafel-Baugruppe nach Anspruch 16,
**dadurch gekennzeichnet, dass**
der Deckel (14) des Handschuhfachkastens (10) an den Koppelriegel (30) angelenkt ist.

18. Armaturentafel-Baugruppe nach Anspruch 17,
**dadurch gekennzeichnet, dass**
der Koppelriegel (30) um seine Längsachse drehbar an den Streben oder Rahmen (22, 23) gelagert ist.

19. Armaturentafel-Baugruppe nach zumindest einem der vorstehenden Ansprüche,
**dadurch gekennzeichnet, dass**
der Handschuhfachkasten (10) zur Befestigung eines Luftsackmoduls (34) einen Träger (36) umfasst, der den Handschuhfachkasten (10) begrenzt, wobei zwei in Längsrichtung des Stoßfängers (20) beanstandete Befestigungsflansche (38) mit dem Träger (36) verbunden sind, über die der Stoßfänger (20) zumindest mittelbar an der Querträgerstruktur (24) abgestützt ist.

20. Armaturentafel-Baugruppe nach zumindest einem der vorstehenden Ansprüche,
**dadurch gekennzeichnet, dass**
die Stützstruktur (12) zumindest einen mit dem Handschuhfachkasten (10) verbundenen Energieabsorptionsträger (40) umfasst, welcher zumindest mittelbar mit der Tragstruktur des Kraftfahrzeugs, vorzugsweise über die Querträgerstruktur (24), biegesteif verbunden ist.

21. Armaturentafel für ein Kraftfahrzeug mit wenigstens einer Baugruppe nach einem der vorhergehenden Ansprüche.
